# EUROPEAN PATENT APPLICATION

(11) **EP 1 887 180 A1**
(43) Date of publication of application: **13.02.2008**
(21) Application number: 06300823.9
(22) Date of filing: 21.07.2006
(51) Int. Cl.: E06B 9/88, H02K 11/00

(54) **Electric Motor and Printed Circuit Board therefor**

(71) Applicant: Alcatel Lucent, 75008 Paris (FR)
(72) Inventor: Kern, Christian, 79848 Bonndorf (DE); Thiele, Frank, 79848 Bonndorf (DE); Selb, Egon, 79865 Grafenhausen (DE); Amann, Thomas, 79865 Grafenhausen (DE)
(74) Representative: Brose, Gerhard

(57) **Abstract**

The invention relates to an electric motor with electrome-chanic final position switch (FPS), especially for sunblind drives, where the electric motor includes a printed circuit board (PCB), and where the final position switch (FPS) is mounted thereon, as well as to a suited printed circuit board (PCB).

## Description

The invention relates to an electric motor according to the preamble of claim 1 and to a printed circuit board therefor.

Such an electric motor is known from DE 196 52 975 C2.

Meanwhile the demands grow, one demand is to have a motor as short as possible.

This demand is complied with by an electric motor according to the teaching of claim 1 and a printed circuit board according to the teaching of claim 10.

The invention makes use of the fact that nowadays motors often anyway carry printed circuit boards for whatever purpose, especially when they are DC motors. If they do not anyway carry a printed circuit board then nevertheless such use will help to save room.

Further details of the invention will become apparent from the depending claims and the following description.

In the following the invention will be described with the aid of the accompanying drawings, in which:
Figure 1 shows a section of a first embodiment of an electric motor according to the invention.
Figure 2 shows a section of a second embodiment of an electric motor according to the invention.

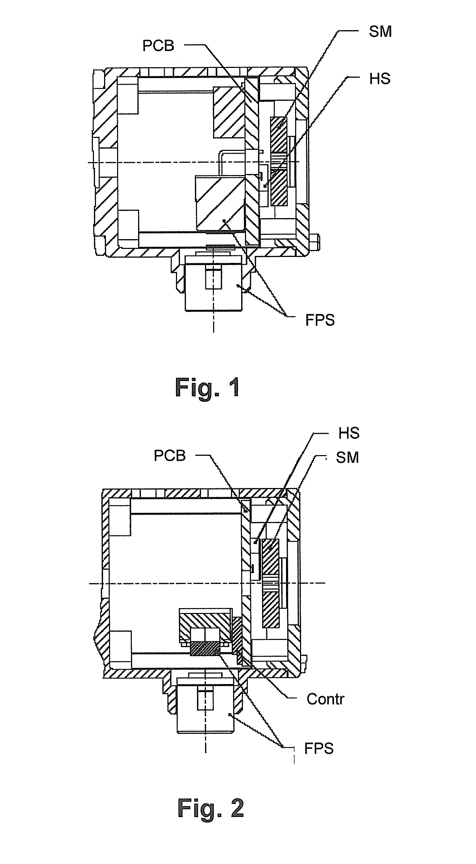

Figure 1 shows a part of an electric motor according to the invention, namely the part between a gear on the left-hand side and the rotor and stator part on the right-hand side. A shaft, indicated here by an interrupted line, its axle, connects these both parts.

Indicated by reference signs are: a printed circuit board PCB, a final position switch FPS, one Hall sensor HS, and a sensor magnet SM.

The sensor magnet SM is rotating with the shaft of the motor and shows a certain number of pole pairs. Each Hall sensor will be actuated during one rotation of the shaft once per pole pair.

The printed circuit board PCB is arranged perpendicular to the axle of the motor. In this example it already carried at least one Hall sensor HS. The use of Hall sensors as position sensors is widespread in this field. One example is the use of Hall sensors in connection with the timely control of the stator coils in brushless DC motors. Another example is the counting of evolutions and thus the determining of distances or positions. In the first example one will need one Hall sensor or one pole pair per coil. In the second example two Hall sensors close to one another will allow to also detect the direction of rotation.

Of course, instead of Hall sensors any other suited sensor might be used as position sensor, e.g. optical sensors in connection with slots in rotating discs.

In brushless DC motors power electronic components are needed which normally also are carried by a printed circuit board.

In brushed DC motors sometimes printed circuit boards are used to carry the brushes.

There are enough examples of using printed circuit boards in modern electric motors, that sometimes one has even more than one printed circuit board in different planes.

But even if one has not anyway a printed circuit board, it is suggested to use one for mounting the final position switch needed here. Normally components adapted to be mount on a printed circuit board are smaller than others. This also applies to switches to be used as final position switches.

It gives the impression that there is lots of free space in the example of figure 1. But the components actually being there are not relevant to the invention and are omitted to make it clearer. As it is an object of this invention to make the motor as short as possible of course otherwise one would shorten this part.

In this example the final position switch FPS shows a fixed part with two connectors, with which this part is fixed and connected to the printed circuit board PBS. A moving part is guided by a part of the housing and, when activated, presses against the fixed part and connects the two connectors, thus closing a circuit.

In the other embodiment partially shown in figure 2, we find a component, carrying the reference Contr. In its most general form this is any kind of evaluation circuit, in the most preferred form it is a controller.

The first task of this element Contr is to evaluate the output signal or signals of the sensor or sensors on the printed circuit board.

As already mentioned above, in brushless DC motors power electronic components are needed to timely empower the different coils. To this end the actual position of the rotor of the motor with respect to its stator is used. In this case the element Contr has to control the power electronic components depending on the sensor signals.

Of course both, the sensors as well as the elements Contr need to be empowered, that is, they need an operating voltage. As brushless DC motors anyway need power electronic components, it is usual to use these components also to control the speed of such motors. This means that the speed is of such motor is not controlled by controlling the DC voltage applied, but by applying a control signal and leaving the DC voltage unchanged.

So at least during operation of such motor the sensors as well as the electronics, including here the element Contr, are empowered anyway. Normally the voltage used therefor is not the voltage used for empowering the coils, but a lower one derived therefrom.

That is why nowadays such motors do not only have connections for applying an operation voltage but also for inputting the necessary control data or signals. Often there are also output connections for outputting sensor signals or values or data derived therefrom by whatever evaluation circuit. Such connections mostly are made by using plug connectors. These are not shown in the figures.

This often is not only the case for brushless DC motors, but also for other electric motors.

A major task in systems like sunblind drives is to limit the range of motion of the driven component, in this example the sunblind. Though we assume to have an electromechanic final position switch, even then it is preferred to stop the motion before activating the electromechanic switch. Under the assumption that there is a continuous power supply, this can be achieved by counting the revolutions of the motor in both directions and stopping shortly before the electromechanic final position switch will be activated again.

If one can use non-volatile memories or has a local battery or the like, one does not necessarily need a continuous power supply and can nevertheless count driven revolutions or evaluate equivalent distances.

Preferably the motor offers a data input, as mentioned above, to mark defined positions for recognizing them later on by means of the evaluation circuit. Especially this allows defining non-mechanical endpoints.

Especially with using a controller as evaluation circuit, it is possible, to run pre-programmed motion sequences. One such motion sequence could be starting from the actual position in either of both directions with continuously increasing the speed from zero to a maximum and at a given position to continuously reduce the speed again from the maximum to zero such that a given final position, especially one of the end positions, is reached.

For applications other than sunblind drives also arbitrary series of pre-programmed motion sequences can be run.

## Claims

1. Electric motor with electromechanic final position switch (FPS), especially for sunblind drives, **characterized in, that** the electric motor includes a printed circuit board (PCB), and that the final position switch (FPS) is mounted thereon.

2. Electric motor according to claim 1, **characterized in, that** at least one sensor (HS) for sensing movements of the electric motor is mounted on the printed circuit board (PCB).

3. Electric motor according to claim 2, **characterized in, that** on the printed circuit board (PCB) there is also mounted an evaluation circuit (Contr), that is build such that therewith output signals of the at least one sensor (HS) can be evaluated.

4. Electric motor according to claim 3, **characterized in, that** the evaluation circuit (Contr) is build such that it is in position to count revolutions.

5. Electric motor according to claim 4, **characterized in, that** the evaluation circuit (Contr) includes an input via which it can be set on a defined position.

6. Electric motor according to claim 1, **characterized in, that** the printed circuit board (PCB) includes a control for the electric motor.

7. Electric motor according to claims 4 and 6, **characterized in, that** the evaluation circuit (Contr) is build such that it controls at least one pre-programmed motion sequence.

8. Electric motor according to claim 5, **characterized in, that** a defined starting point is given by the operation of the final position switch (FPS).

9. Electric motor according to claim 3, **characterized in, that** the evaluation circuit (Contr) includes a controller.

10. Printed circuit board (PCB) for an electronic circuit, with a final position switch (FPS) mounted thereon, for the electric motor according to claim 1.
